(19) Europäisches Patentamt
European Patent Office
Office européen des brevets

(11) **EP 1 909 440 A1**

(12) **EUROPEAN PATENT APPLICATION**
published in accordance with Art. 153(4) EPC

(43) Date of publication:
**09.04.2008 Bulletin 2008/15**

(51) Int Cl.:
**H04L 12/56** (2006.01)

(21) Application number: **06767700.5**

(22) Date of filing: **30.06.2006**

(86) International application number:
**PCT/JP2006/313092**

(87) International publication number:
**WO 2007/004558 (11.01.2007 Gazette 2007/02)**

(84) Designated Contracting States:
**DE FR GB**

(30) Priority: **06.07.2005 JP 2005196937**

(71) Applicants:
• **NEC Corporation**
**Minato-ku**
**Tokyo 108 (JP)**

• **NTT DoCoMo, Inc.**
**Chiyoda-ku**
**Tokyo 100-6150 (JP)**

(72) Inventor: **TAKAI, Kenichi**
**Tokyo 108-8001 (JP)**

(74) Representative: **Glawe, Delfs, Moll**
**Patentanwälte**
**Postfach 26 01 62**
**80058 München (DE)**

(54) **BANDWIDTH CONTROL CIRCUIT AND BANDWIDTH CONTROL METHOD USED THEREFOR**

(57) Buffer (2) temporarily stores a packet transmitted from transmission node (1). Counter (3) measures the size (length) of the packet sent from buffer (2), and memory (4) temporarily stores the value of counter (3). Register (5) stores a desired bandwidth, and register (6) stores the maximum transmission physical bandwidth of transmission node (1). Arithmetic circuit (7) calculates the size of an IFG to be inserted, on the basis of the data in memory (4), register (5), and register (6). Counter (8) counts the IFG size calculated by arithmetic circuit (7). Counter (9) measures the remaining capacity of buffer (2), and pause generator (10) generates a pause frame according to the value of counter (9) and outputs it to transmission node (1).

【FIG. 1】

**Description**

Technical Field

The present invention relates to a bandwidth control circuit and a bandwidth control method for use therewith, and more particularly to the flow control in an IP (Internet Protocol) network.

Related Art

Along with the proliferation of the IP, it is expected that the trend of using the IP for an apparatus interface such as a network intra-structure will intensify in the future. In such an apparatus, there is usually a central control function part for taking charge of the central control means of the apparatus, whereby the traffic of IP packets from the part having a peripheral function to the part having a central control function may be concentrated.

In such a case, if the transmission opportunity of the packet from each function part to the central control function part within the apparatus is unequal, there is a significant problem from the standpoint of the processing ability and operational stability of the apparatus.

In the flow control for the conventional IP network, for example, if a receiving node reaches a state in which packets are not received, a pause frame (Pause Frame) is transmitted with a request to the source that the transmission be stopped. Also, the time for stopping the transmission is included in the pause frame (e.g., refer to Japanese Patent Laid-Open No. 2003-244181).

Herein, the pause frame means the frame in which an operation code indicating a pause is entered in a MAC control parameter of a MAC (Media Access Control) control frame and the stop time is described in a data part.

According to the flow control method for the conventional IP network as described above, for example, when the packets from a plurality of transmission nodes are concentrated on a specific receiving node, all the transmission nodes trying to transmit the packets to this receiving node stop the transmission, if the receiving node transmits a pause frame. However, since the timing of restarting the transmission depends on the pause time (= common to all the transmission nodes) included in the pause frame, all the transmission nodes attempt to restart the transmission almost at the same time after a fixed period of time.

At this time, there is no definite rule regarding the transmission node to which the transmission opportunity should be given, so the current practice is first come, first served. Hence, in a case where the traffic is concentrated from a plurality of nodes in a few nodes in the conventional IP network, there occurs an unintentional problem in which some nodes have a higher transmission priority and some nodes have a lower transmission priority.

Disclosure of the Invention

This invention has been devised to solve the above-mentioned problems, and it is an object of the invention to provide a bandwidth control circuit and a bandwidth control method for use in the same circuit in which the bandwidth for packet transmission in the IP network can be independently controlled to ensure that smooth packet transmission in achieved.

The invention provides a bandwidth control circuit comprising measurement means for measuring the size of a packet transmitted from a transmission node at all times while temporarily storing the packet in a buffer, and change means for changing the size of an IFG (Inter Frame Gap) to be closer to a preset bandwidth each time the packet is transmitted.

The invention provides a bandwidth control method wherein a bandwidth control circuit performs a first process for measuring the size of a packet transmitted from a transmission node at all times while temporarily storing the packet in a buffer, and a second process for changing the size of an IFG (Inter Frame Gap) to be closer to a preset bandwidth each time the packet is transmitted.

That is, the bandwidth control circuit of the invention has a function of measuring the size of a packet transmitted from a transmission node at all times while temporarily storing the packet in a buffer, and changing the size of an IFG (Inter Frame Gap) to be closer to a preset bandwidth each time the packet is transmitted in a node transmission function part, and can freely control the output bandwidth of the transmission node.

Also, the bandwidth control circuit of the invention has a function of generating a pause frame (Pause Frame) according to the remaining capacity of the buffer and directly inputting it into the transmission node to control the number of transmission packets transmitted from the transmission node.

Thereby, the bandwidth control circuit of the invention can enable bandwidth control in an IP (Internet Protocol) network where dynamic bandwidth restriction is usually impossible.

Also, the bandwidth control circuit of the invention can afford an equal transmission opportunity for the transmission node, and prioritize the transmission opportunity for the transmission node depending on the set transmission bandwidth.

Further, the bandwidth control circuit of the invention can preset the transmission bandwidth on the transmission side according to the receiving capability of the receiving node to smooth traffic density within the network.

The invention has the following configuration and operation, and has the effect that bandwidth for packet transmission in the IP network can be independently controlled to ensure smooth packet transmission.

Brief Description of the Drawings

Figure 1 is a block diagram showing the configuration of a bandwidth control circuit according to one exemplary embodiment of the present invention;

Figure 2 is a flowchart showing the operation of the bandwidth control circuit according to one exemplary embodiment of the invention; and

Figure 3 is a flowchart showing the operation of the bandwidth control circuit according to one exemplary embodiment of the invention.

Best Mode for Carrying Out the Invention

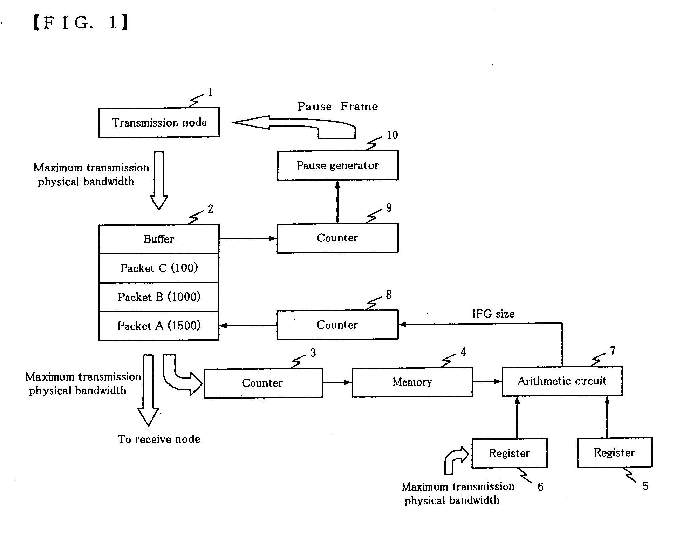

An exemplary embodiment of the present invention will be described below with reference to the drawings. Figure 1 is a block diagram showing the configuration of a bandwidth control circuit according to one exemplary embodiment of the invention. The bandwidth control circuit according to one exemplary embodiment of the invention comprises buffer 2 for temporarily storing a packet transmitted from transmission node 1, counter 3 for measuring the size (length) of the packet sent from buffer 2, memory 4 for temporarily storing the value of counter 3, register 5 for storing a desired bandwidth, register 6 for storing the maximum transmission physical bandwidth of transmission node 1, arithmetic circuit 7 for calculating the size of an IFG (Inter Frame Gap) to be inserted, on the basis of the content of memory 4, the content of register 5, and the content of register 6, counter 8 for counting the IFG size calculated by arithmetic circuit 7, counter 9 for measuring the remaining capacity of buffer 2, and pause generator 10 for generating a pause frame (Pause Frame) according to the value of counter 9 and outputting it to transmission node 1.

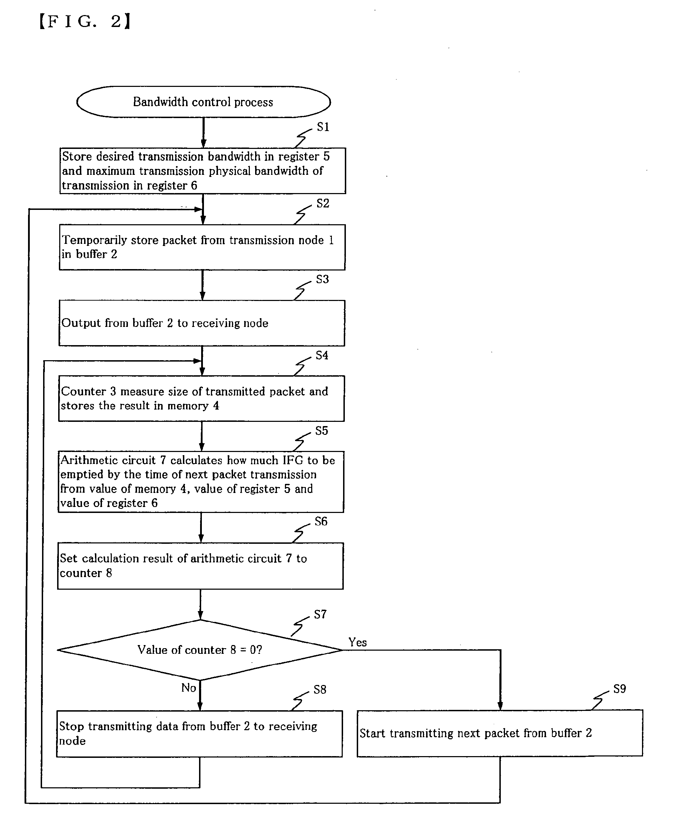

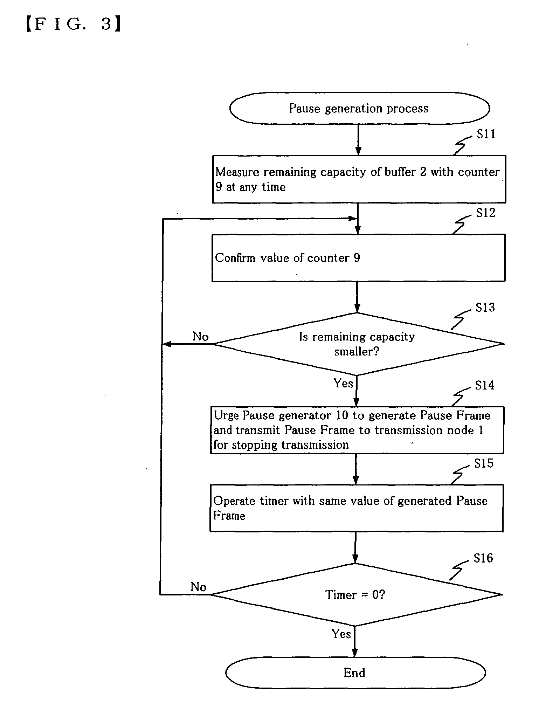

Figures 2 and 3 are flowcharts showing the operation of the bandwidth control circuit according to one exemplary embodiment of the invention. Referring to Figures 1 to 3, the operation of the bandwidth control circuit according to one exemplary embodiment of the invention will be described below.

First, a desired transmission bandwidth (e.g., 20 Mbps) is stored in register 5, and the maximum transmission physical bandwidth (e.g., 100 Mbps) of transmission node 1 is stored in register 6 (step S1 of Figure 2). These values can be rewritten by input means (not shown) as appropriate. In the following explanation, the above specific numerical value examples are employed.

Transmission node 1 transmits a packet in a physically transmittable bandwidth, irrespective of the desired transmission bandwidth, until it receives a pause frame from a receiving node. Herein, a case of transmitting a packet A of 1500 Bytes, a packet B of 1000 Bytes and a packet C of 100 Bytes successively in the maximum bandwidth (100 Mbps) is taken as an example.

First, packet A is temporarily stored in buffer 2, and outputted from buffer 2 to the receiving node (steps S2, S3 of Figure 2). At this time, counter 3 measures the size (1500 Bytes) of the packet transmitted and stores the measurement result in memory 4 (step S4 of Figure 2). Arithmetic circuit 7 calculates the size of an IFG to be emptied for the next packet transmission on the basis of the value of memory 4, the value of register 5 and the value of register 6 (step S5 of Figure 2). This calculation by arithmetic circuit 7 can be performed in accordance with a simple expression such as

$$\text{IFG} = \text{value of memory 4} * (W2/W1-1)$$

Where W1 is a desired transmission bandwidth stored in register 5 and W2 is the maximum transmission physical bandwidth of the transmission node stored in register 6.

For example, in the above case,

| | |
|---|---|
| Value of memory 4: | 1500 Bytes |
| Desired bandwidth (W1): | 20 Mbps |

(continued)

Maximum transmission physical bandwidth (W2):     100 Mbps

Consequently, it is required to free the IFG of the size

$$IFG = 1500*(100/20\text{-}1)$$

$$= 1500*4$$

$$= 6000 \text{ Byte}$$

Arithmetic circuit 7 sets this calculation result to counter 8 (step S6 of Figure 2), and stops sending the data from buffer 2 to the receiving node until the value of counter 8 becomes zero (steps S7, S8 of Figure 2). If the value of counter 8 becomes zero (step S7 of Figure 2), the desired bandwidth is reached while waiting for the packet transmission, whereby the transmission of the next packet B from buffer 2 is started (step S9 of Figure 2).

If the same calculation is repeated in this way, it can be calculated that after transmitting packet B, 4000 Bytes of data will be cleared from the IFG, and that after transmitting packet C, 400 Bytes of data will be cleared from the IFG.

On the other hand, counter 9 measures the remaining capacity of buffer 2 at any time (step S11 of Figure 3). If the remaining capacity is smaller (steps S12, S13 of Figure 3), pause generator 10 is urged to generate a pause frame and send the Pause frame to transmission node 1 (step S14 of Figure 3). Transmission node 1 upon receiving the pause frame from Pause generator 10 stops transmission of the packet. A packet stop time is the period of time as indicated in the pause frame.

In this Pause generator 10, the timer (Timer) (not shown) having the same value set in the generated pause frame is operated (step S15 of Figure 3). The operation returns to step S11 to reconfirm the value of counter 9, until the value of this timer reaches zero (step S16 of Figure 3). If the empty capacity is still smaller (steps S12, S13 of Figure 3), the pause frame is transmitted again (step S14 of Figure 3).

In this exemplary embodiment, bandwidth control is enabled in the IP (Internet Protocol) network where the dynamic bandwidth restriction is usually impossible. Also, in this exemplary embodiment, transmission node 1 can be given an equal transmission opportunity, whereby it is possible to prioritize the transmission opportunity for transmission node 1, depending on the set transmission bandwidth. Further, in this exemplary embodiment, the transmission bandwidth on the transmission side can be preset according to the reception capacity of the receiving node, thereby smoothing traffic density within the network.

**Claims**

1. A bandwidth control circuit **characterized by** comprising:

   measurement means for measuring the size of a packet transmitted from a transmission node at all times while temporarily storing said packet in a buffer; and
   change means for changing the size of an IFG (Inter Frame Gap) to be closer to a preset bandwidth each time said packet is transmitted.

2. The bandwidth control circuit according to claim 1, **characterized in that** said measurement means comprises a first counter for measuring the size of a packet sent from said buffer, and a memory for temporarily memorizing the value of said first counter, and said change means comprises a first register for storing a desired bandwidth, a second register for storing the maximum transmission physical bandwidth of said transmission node, arithmetic means for calculating the size of said IFG to be inserted, on the basis of the content of said memory, the content of said first register, and the content of said second register, and a second counter for counting the size of said IFG calculated by said arithmetic means.

3. The bandwidth control circuit according to claim 2, **characterized in that** the transmission opportunity for said transmission node is prioritized, based on said maximum transmission physical bandwidth stored in said second register.

4. The bandwidth control circuit according to any one of claims 1 to 3, **characterized by** comprising means for generating a pause frame according to the remaining capacity of said buffer and directly inputting it into said transmission node to control the number of transmission packets transmitted from said transmission node.

5. The bandwidth control circuit according to claim 4, **characterized in that** said direct input means into said transmission node comprises a third counter for measuring the remaining capacity of said buffer, and generation means for generating a pause frame according to the value of said third counter to output it to said transmission node.

6. A bandwidth control method **characterized in that** a bandwidth control circuit performs a first process for measuring the size of a packet transmitted from a transmission node at all times while temporarily storing said packet in a buffer, and a second process for changing the size of an IFG (Inter Frame Gap) to be closer to a preset bandwidth each time said packet is transmitted.

7. The bandwidth control method according to claim 6, **characterized in that** said first process comprises a first count process for measuring the size of a packet sent from said buffer, and a process for temporarily memorizing the value of said first counter in a memory, and said second process comprises a process for storing a desired bandwidth in the first register, a process for storing the maximum transmission physical bandwidth of said transmission node in the second register, an arithmetic operation process for calculating the size of said IFG to be inserted, on the basis of the content of said memory, the content of said first register 5, and the content of said second register, and a second count process for counting the size of said IFG calculated through said arithmetic operation process.

8. The bandwidth control method according to claim 7, **characterized by** comprising prioritizing the transmission opportunity for said transmission node, based on said maximum transmission physical bandwidth stored in said second register.

9. The bandwidth control method according to any one of claims 1 to 3, **characterized in that** said bandwidth control circuit performs a process for generating a pause frame according to the remaining capacity of said buffer and directly inputting it into said transmission node to control the number of transmission packets transmitted from said transmission node.

10. The bandwidth control method according to claim 9, **characterized in that** said bandwidth control circuit performs a third count process for measuring the remaining capacity of said buffer, and a process for generating a pause frame according to the value of said third counter process and outputting it to said transmission node, in directly inputting the pause frame into said transmission node.

**Amended claims under Art. 19.1 PCT**

1. A bandwidth control circuit **characterized by** comprising:

measurement means for measuring the size of a packet transmitted from a transmission node at all times while temporarily storing said packet in a buffer; and
change means for changing the size of an IFG (Inter Frame Gap) to be closer to a preset bandwidth each time said packet is transmitted.

2. The bandwidth control circuit according to claim 1, **characterized in that** said measurement means comprises a first counter for measuring the size of a packet sent from said buffer, and a memory for temporarily memorizing the value of said first counter, and said change means comprises a first register for storing a desired bandwidth, a second register for storing the maximum transmission physical bandwidth of said transmission node, arithmetic means for calculating the size of said IFG to be inserted, on the basis of the content of said memory, the content of said first register, and the content of said second register, and a second counter for counting the size of said IFG calculated by said arithmetic means.

3. The bandwidth control circuit according to claim 2, **characterized in that** the transmission opportunity for said transmission node is prioritized, based on said maximum transmission physical bandwidth stored in said second register.

4. The bandwidth control circuit according to any one of claims 1 to 3, **characterized by** comprising means for generating a pause frame according to the remaining capacity of said buffer and directly inputting it into said transmission node to control the number of transmission packets transmitted from said transmission node.

**5.** The bandwidth control circuit according to claim 4, **characterized in that** said direct input means into said transmission node comprises a third counter for measuring the remaining capacity of said buffer, and generation means for generating a pause frame according to the value of said third counter to output it to said transmission node.

**6.** A bandwidth control method **characterized in that** a bandwidth control circuit performs a first process for measuring the size of a packet transmitted from a transmission node at all times while temporarily storing said packet in a buffer, and a second process for changing the size of an IFG (Inter Frame Gap) to be closer to a preset bandwidth each time said packet is transmitted.

**7.** The bandwidth control method according to claim 6, **characterized in that** said first process comprises a first count process for measuring the size of a packet sent from said buffer, and a process for temporarily memorizing the value of said first counter in a memory, and said second process comprises a process for storing a desired bandwidth in the first register, a process for storing the maximum transmission physical bandwidth of said transmission node in the second register, an arithmetic operation process for calculating the size of said IFG to be inserted, on the basis of the content of said memory, the content of said first register 5, and the content of said second register, and a second count process for counting the size of said IFG calculated through said arithmetic operation process.

**8.** The bandwidth control method according to claim 7, **characterized by** comprising prioritizing the transmission opportunity for said transmission node, based on said maximum transmission physical bandwidth stored in said second register.

**9.** (Amended) The bandwidth control method according to any one of claims 6 to 8, **characterized in that** said bandwidth control circuit performs a process for generating a pause frame according to the remaining capacity of said buffer and directly inputting it into said transmission node to control the number of transmission packets transmitted from said transmission node.

**10.** The bandwidth control method according to claim 9, **characterized in that** said bandwidth control circuit performs a third count process for measuring the remaining capacity of said buffer, and a process for generating a pause frame according to the value of said third counter process and outputting it to said transmission node, in directly inputting the pause frame into said transmission node.

**【F I G. 1】**

[F I G. 2]

```
                    ╭─────────────────────────────╮
                    │   Bandwidth control process  │
                    ╰─────────────────────────────╯
                                 │                    S1
┌──────────────────────────────────────────────────┐
│ Store desired transmission bandwidth in register 5 │
│ and maximum transmission physical bandwidth of     │
│ transmission in register 6                         │
└──────────────────────────────────────────────────┘
                                 │                    S2
┌──────────────────────────────────────────────────┐
│ Temporarily store packet from transmission node 1  │
│ in buffer 2                                        │
└──────────────────────────────────────────────────┘
                                 │                    S3
┌──────────────────────────────────────────────────┐
│ Output from buffer 2 to receiving node             │
└──────────────────────────────────────────────────┘
                                 │                    S4
┌──────────────────────────────────────────────────┐
│ Counter 3 measure size of transmitted packet and   │
│ stores the result in memory 4                      │
└──────────────────────────────────────────────────┘
                                 │                    S5
┌──────────────────────────────────────────────────┐
│ Arithmetic circuit 7 calculates how much IFG to be │
│ emptied by the time of next packet transmission    │
│ from value of memory 4, value of register 5 and    │
│ value of register 6                                │
└──────────────────────────────────────────────────┘
                                 │                    S6
┌──────────────────────────────────────────────────┐
│ Set calculation result of arithmetic circuit 7 to  │
│ counter 8                                          │
└──────────────────────────────────────────────────┘
                                 │                    S7
                          ◇ Value of counter 8 = 0? ◇      Yes
                                 │ No                        S8                                         S9
┌───────────────────────────────────────────┐      ┌───────────────────────────────────────────┐
│ Stop transmitting data from buffer 2 to     │      │ Start transmitting next packet from buffer 2 │
│ receiving node                              │      │                                              │
└───────────────────────────────────────────┘      └───────────────────────────────────────────┘
```

**[F I G. 3]**

Flowchart:

Pause generation process

S11 — Measure remaining capacity of buffer 2 with counter 9 at any time

S12 — Confirm value of counter 9

S13 — Is remaining capacity smaller? → No / Yes

S14 — Urge Pause generator 10 to generate Pause Frame and transmit Pause Frame to transmission node 1 for stopping transmission

S15 — Operate timer with same value of generated Pause Frame

S16 — Timer = 0? → No / Yes

End

EP 1 909 440 A1

**INTERNATIONAL SEARCH REPORT**

| | International application No. |
|---|---|
| | PCT/JP2006/313092 |

A.    CLASSIFICATION OF SUBJECT MATTER
*H04L12/56*(2006.01)i

According to International Patent Classification (IPC) or to both national classification and IPC

B.    FIELDS SEARCHED

Minimum documentation searched (classification system followed by classification symbols)
*H04L12/56*(2006.01)i

Documentation searched other than minimum documentation to the extent that such documents are included in the fields searched
Jitsuyo Shinan Koho          1922-1996   Jitsuyo Shinan Toroku Koho   1996-2006
Kokai Jitsuyo Shinan Koho    1971-2006   Toroku Jitsuyo Shinan Koho   1994-2006

Electronic data base consulted during the international search (name of data base and, where practicable, search terms used)

C.    DOCUMENTS CONSIDERED TO BE RELEVANT

| Category* | Citation of document, with indication, where appropriate, of the relevant passages | Relevant to claim No. |
|---|---|---|
| X<br>Y | JP 2002-325093 A   (Fujitsu Ltd.),<br>08 November, 2002 (08.11.02),<br>Par. Nos. [0015] to [0039]<br>& US 2002-159480 A1 | 1-3,6-8<br>4,5,9,10 |
| Y | Koichi TANIGAWA et al., "Switching Hub ni Okeru Pause Frame Soshin Hoho ni Kansuru Kento", The Transactions of the Institute of Electro, 01 April, 2003 (01.04.03), Vol.J86-B, No.3, pages 590 to 594, chapters 1, 2 | 4,5,9,10 |
| Y | JP 2004-7180 A   (NEC Corp.),<br>08 January, 2004 (08.01.04),<br>Par. Nos. [0033] to [0038]<br>(Family: none) | 4,5,9,10 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>18 July, 2006 (18.07.06) | Date of mailing of the international search report<br>25 July, 2006 (25.07.06) |
|---|---|
| Name and mailing address of the ISA/<br>Japanese Patent Office | Authorized officer |
| Facsimile No. | Telephone No. |

Form PCT/ISA/210 (second sheet) (April 2005)

10

**INTERNATIONAL SEARCH REPORT**

| International application No. |
| --- |
| PCT/JP2006/313092 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2003-273915 A  (NTT Electronics Corp.), 26 September, 2003 (26.09.03), Par. Nos. [0013] to [0025] (Family: none) | 1-3,6-8 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003244181 A